(19) Europäisches Patentamt

European Patent Office

Office européen des brevets

(11) Publication number: **0 261 901 B1**

(12) **EUROPEAN PATENT SPECIFICATION**

(45) Date of publication of patent specification: **08.12.93**  (51) Int. Cl.⁵: **G09G 3/36**, H04N 3/12

(21) Application number: **87308314.1**

(22) Date of filing: **18.09.87**

(54) **Display device.**

(30) Priority: **20.09.86 GB 8622717**

(43) Date of publication of application:
**30.03.88 Bulletin 88/13**

(45) Publication of the grant of the patent:
**08.12.93 Bulletin 93/49**

(84) Designated Contracting States:
**AT BE CH DE ES FR GB GR IT LI LU NL SE**

(56) References cited:
**EP-A- 0 193 728
CH-A- 641 926
US-A- 4 210 934
US-A- 4 481 511
US-A- 4 571 584**

(73) Proprietor: **THORN EMI plc
4 Tenterden Street
London W1R 9AH(GB)**

(72) Inventor: **Humphries, Brian Jason
5, Convent Road
Windsor Berkshire(GB)**
Inventor: **Waters, Colin Martin
Erindale Cottage
Carriage Drive
Frodsham Cheshire(GB)**

(74) Representative: **Hurst, Richard Arthur Alexander et al
THORN EMI Patents Limited,
Central Research Laboratories,
Dawley Road
Hayes, Middlesex UB3 1HH (GB)**

Rank Xerox (UK) Business Services
(3.10/3.6/3.3.1)

EP 0 261 901 B1

## Description

The present invention relates to a display device and method, and especially but not solely, to a grey-scale television display using bi-stable elements, for example made from ferroelectric liquid-crystal material.

GB-A- 1594151 discloses a display in which each pixel is formed by a light emitting diode which is driven for a period proportional to the value of the binary video signal. However, in order to produce an adequate video image, it is necessary to address more than one row of pixels at a time, which may not be possible with light transmissive displays where connections can only be made at the edges of the display, such as liquid crystal displays.

EP-A-193728 discloses a display in which a binary signal representing a brightness level for each pixel must first be converted into a signal having one pulse per grey level, such that the number of switching intervals required is the same as the number of grey levels.

It is an object of the present invention to reduce the addressing time required to produce a given greyscale.

The present invention provides a display device comprising:

a lattice of pixels, each selectably settable in a bistable manner in dependence on a data word of a received data signal representing one picture for display, the data word comprising a plurality of sections and representing a brightness level for the pixel; and means to effect time-multiplex addressing of rows of pixels according to a predetermined sequence; characterised in that, for each addressing of a row, the pixels of the row are each addressed with a section of the corresponding data word, the sections having the same significance, and, in the course of the sequence, the pixels of each row are addressed with each section of the corresponding words, the predetermined sequence being such that any given addressing of a row has a temporal separation in the sequence from the next addressing thereof which is proportional to the significance of the sections corresponding to the given addressing.

Preferably, the addressing means includes: means to set all the pixels of one row in accordance with a section of the corresponding data words having one significance and, next in the addressing sequence, to set all the pixels of another row in accordance with a section of the corresponding data words having another significance. Advantageously, each row of a group of n rows, where n is equal to the number of sections in each data word, is set in accordance with a section of the corresponding data words different from the others in the group, the members of the group being adjacent in the addressing sequence.

After being addressed, the pixels remain, or are maintained, set until the next addressing occurs. Thus the time duration of each pixel being set depends on the temporal separation in the addressing sequence between the relevant pixels, this separation depending on the significance of the section of the data word with which the pixel has been addressed. Thus the addressing means operates to set a row for a first predetermined time interval in one addressing for a given picture, and then to set the row for a second predetermined time interval in another addressing for that picture, thereby providing differing setting tinies for different addressing of a row for a given picture.

Preferably the display device comprises means to produce a value for the mean brightness level for the picture, and means to effect scaling of the data words for a next picture in accordance with the produced mean brightness value for the said picture.

The present invention also provides a method of operating a display device having a lattice of pixels each selectably settable in a bi-stable manner, the method comprising:

receiving a data signal representing a picture for display, the signal comprising a plurality of binary data words each representing a brightness level for a corresponding pixel, each data word including a plurality of sections, and time-multiplex addressing rows of pixels a plurality of times for the picture;

characterised by addressing the pixels of each row each with a section of the corresponding data word, the sections having the same significance, in a sequence in the course of which the pixels of each row are each addressed with each section of the corresponding word, any given addressing of a row having a temporal separation in the addressing sequence from the next addressing thereof which is proportional to the significance of the sections corresponding to the given addressing.

Preferably, the addressing step includes: setting all the pixels of one row in accordance with a section of the corresponding data words having one significance and, next in the addressing sequence, setting all the pixels of another row in accordance with another section of the corresponding data words having another significance.

Advantageously, each row of a group of four rows is set in accordance with a section of the corresponding data words different from the others in the group, the members of the group being adjacent in the addressing sequence.

2

Preferably, the method includes producing a value for the meal, brightness level for the picture, and effecting scaling of the sections of the data words for a next picture in accordance with the produced mean brightness value for the said picture.

The present invention enables the effective addressing of a lattice of bi-stable settable pixels without requiring additional lines or extremely fast switching time.

Preferably, a pixel comprises one or more liquid crystal cells.

The present invention is applicable to colour displays and to monochrome displays.

In order that the invention may more readily be understood, a description is now given, by way of example only, reference being made to the accompanying drawings, in which:

Figure 1 is a block circuit diagram of a display device embodying the present invention;

Figure 2 is a representation of part of a digital video signal for use with the display device shown in Figure 1;

Figure 3 is block flow diagram of part of the operation of the device shown in Figure 1;

Figure 4 is a representation of the addressing sequence of the device shown in Figure 1;

Figure 5 is a representation of a processing stage in another display device embodying the present invention; and

Figure 6 is a block circuit diagram of part of a display device in accordance with that of Figure 5, and

Figures 7 to 11 relate to another form of the invention.

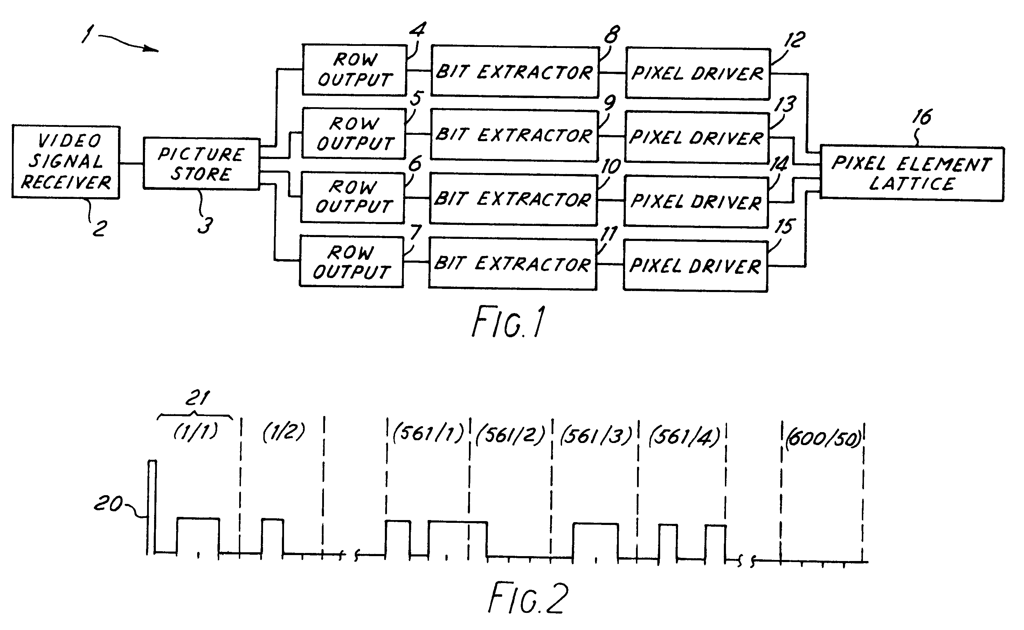

In Figure 1, the display device, generally designated as 1, has a video signal receiver 2 and a store 3 with a capacity to hold an adequate amount of the video signal to enable the display of a complete image, i.e. one picture of the video signal. There are also four row-output devices 4,5,6 and 7, each of which enable the video information for a row of pixels to be taken out from picture store 3; each such device has a bit extractor 8,9,10 or 11 respectively to separate out one bit of the information for each pixel of the respective row, the resultant signal being passed to a pixel driver 12,13,14 or 15 which operates on a lattice 16 formed of 600 rows each of 50 bi-stable surface stabilised ferroelectric liquid crystal pixel-elements.

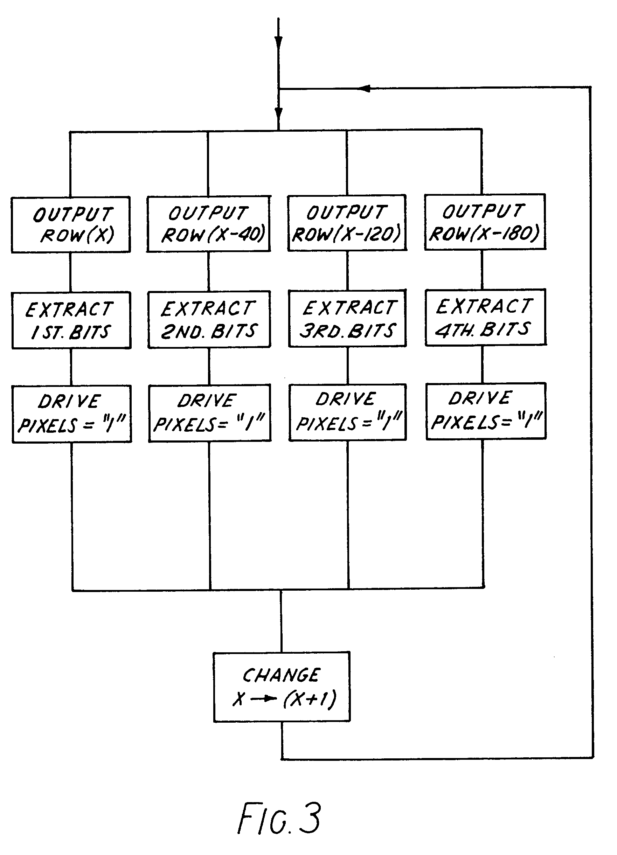

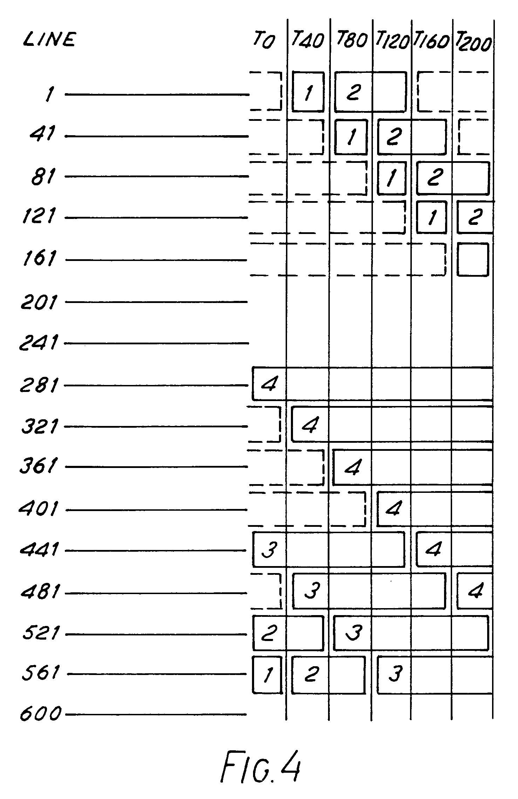

Figure 2 shows an abbreviated form of a video signal suitable for use with the display device 1 and corresponding to one picture in length. This signal has a flag pulse 20 to indicate the start of the signal for a picture, and then a number of positions (only one being referenced, as 21), each being the display data for a particular pixel (as indicated by the bracketed co-ordinates in Figure 2, whereby X/Y refers to the pixel of row X, column Y). More specifically, each portion 21 has four bits each of which represents the setting value for use in one of the addressing stages as described hereinafter in relation to Figures 3 and 4.

Figure 3 shows the sequence of operations of the row-outputs, bit extractors and pixel drivers during a line period, while Figure 4 shows the mode of addressing performed on certain of the rows over a picture period.

Figure 4 shows the display device 1 at the stage at which rows 281, 441, 521 and 561 are being addressed in a given line period. Thus each pixel element in row 561 of the lattice which has a "1" as its first bit (i.e. least significant bit) is turned on, while all the other pixel elements are turned off; accordingly, taking the video signal shown in Figure 2, pixels 561/1 and 561/2 would be on and pixels 561/3 and 561/4 would be off. Similarly each pixel element in row 521 which has a "1" as its second bit is turned on, each pixel element of line 441 which has a "1" as its third bit is turned on, and each pixel element of line 281 which has its fourth bit (i.e. most significant bit) is turned on. All these pixels are addressed sequentially within one line period.

In the next line period, lines 282, 442, 522 and 562 are addressed in exactly the same way as were lines 281, 441, 521 and 561 respectively in the previous line period. Likewise for the next and subsequent line periods. However, in the 41st line period the addressed lines are 321, 481, 561 and 1 (the latter being effectively line 601). Therefore line 561 which was addressed by the first bit of the display data in the first line period is addressed by the second bit of the display data; the interval between the two addresses is 40 line periods, so that the first bit display data drives the relevant pixels for a time interval which is 1/16 of a picture period and which corresponds to one grey level. The third addressing of line 561, by the third bit of the display data, occurs after a further 80 line periods, so the second bit display data is used for a further 2/16 of a picture period and therefore corresponds to two grey levels; the next addressing is by the fourth bit after another 160 line periods and so the third bit display data is used for this time interval which corresponds to four grey levels; the next addressing is by the first bit after another 320 line periods which corresponds to eight grey levels. The human visual system has a response which integrates these individual grey levels.

In the same way, each line in the picture is addressed four times during a picture period, at intervals of 40, 80, 160 and 320 line periods, and each pixel element can be turned on for any one or more of these intervals as considered appropriate. Thus a display data portion of four bits defines one of 16 grey levels.

Taking the display data portions shown in Figure 2, 1/1 has level 8 of 16 grey levels, 1/2 has level 3, 561/1 has level 13, 561/2 has level 1, 561/3 has level 8, 561/4 has level 10 and 600/50 has level 0.

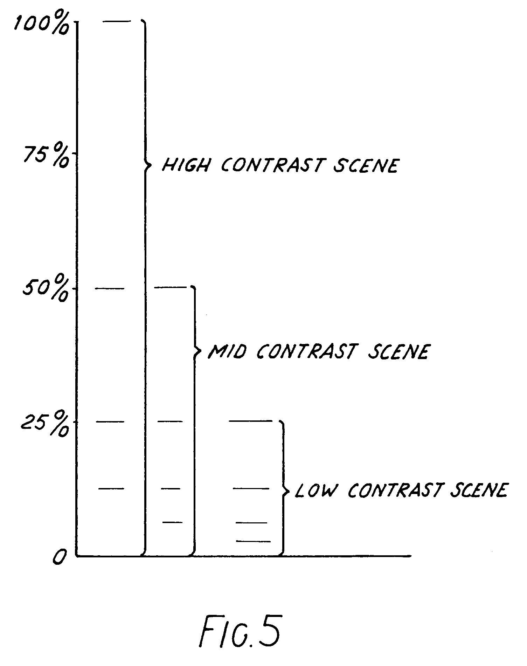

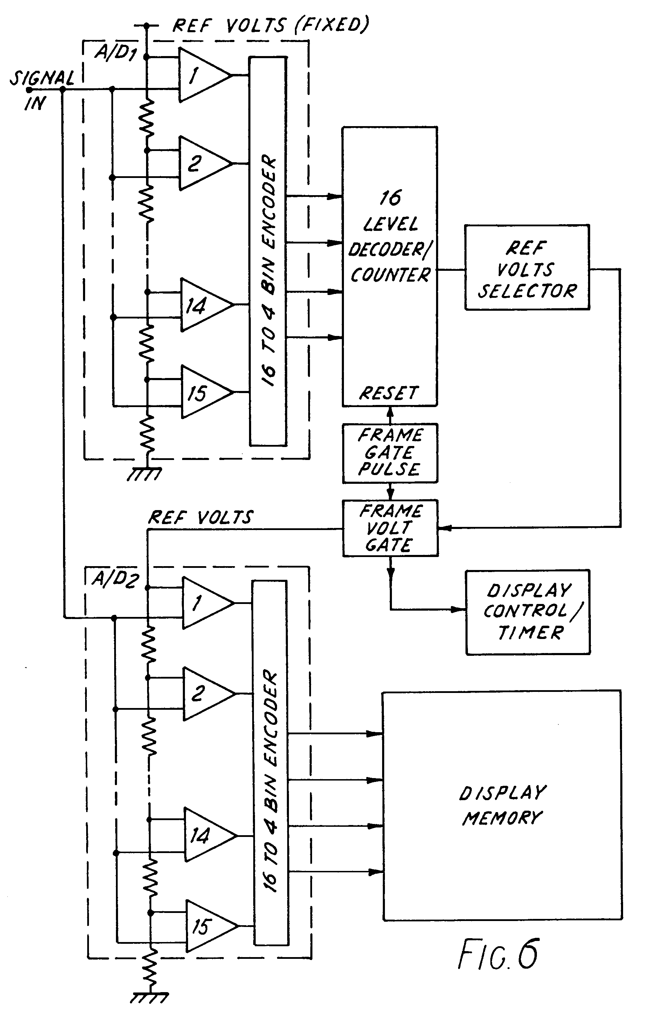

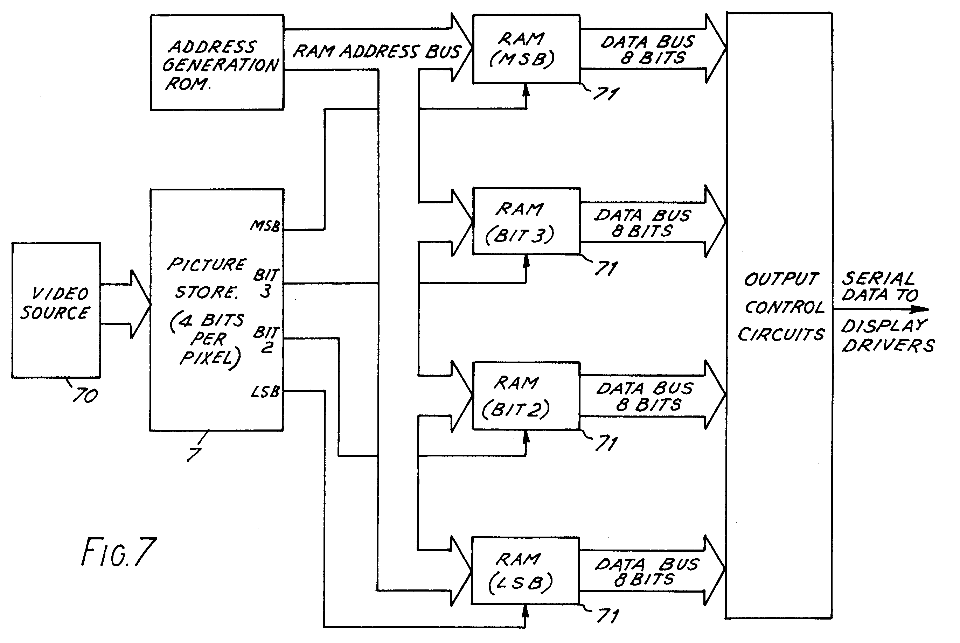

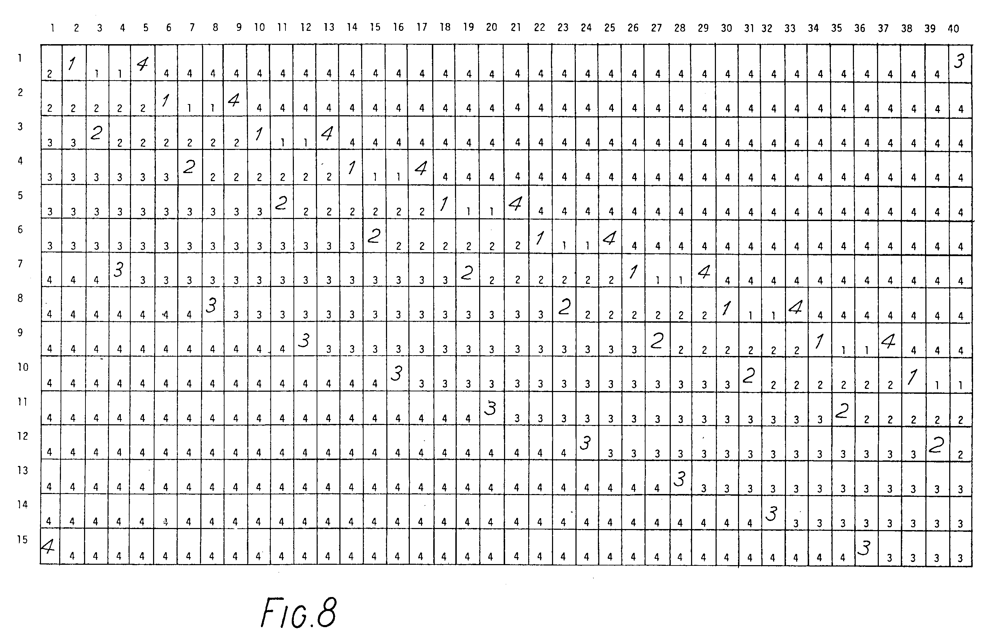

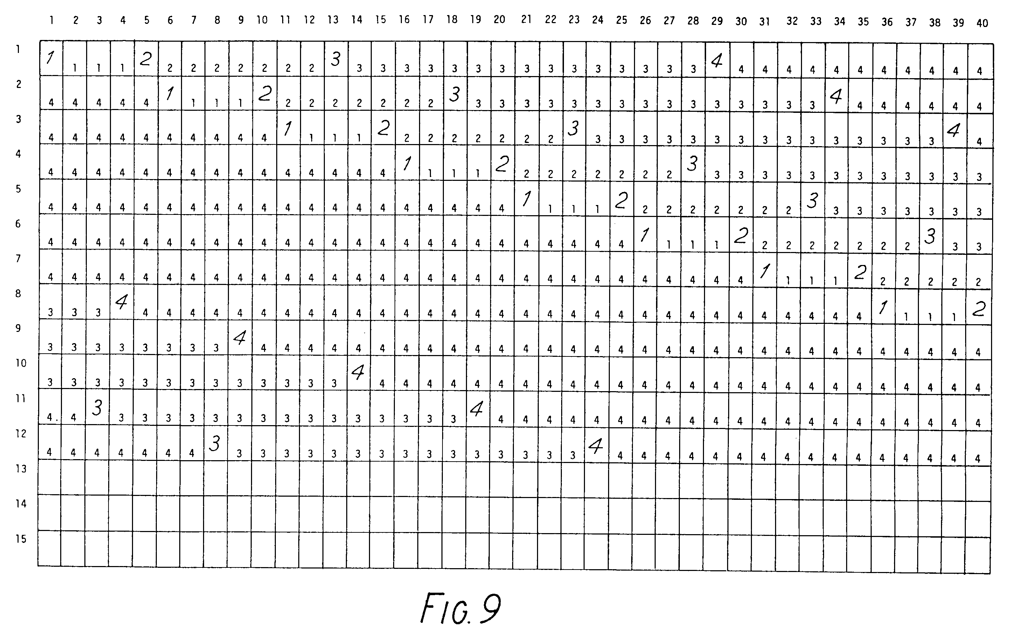

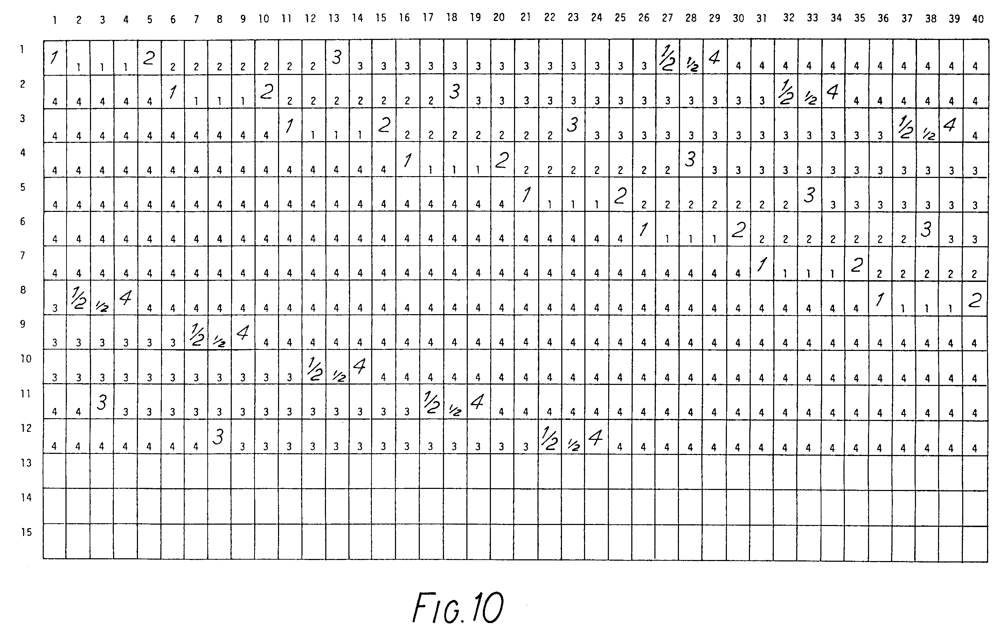

In any one picture it may only be possible to differentiate 16 grey levels; however this may not be adequate to display the fully dynamic range of brightness levels in successive pictures, since very bright or very dark pictures will lose contrast and fade out. As an alternative to reducing the line address time to 20 $\mu$s to display 255 lines/field with a full 8 bit resolution, there may be used an adaptive greyscale scheme in which the mean brightness level of the preceding field sets the reference voltage of 4-bit A/D converter. The analogue signal is converted by the A/D converter so that the 4-bits scale the range of brightness in the previous picture ensuring that 16 grey levels can always be resolved in each picture; Figure 5 shows the quantisation of 4-bit levels for scenes of various contrast levels. This is achieved by detecting some defined mean brightness level of the previous frame; the level is compared with the 100% brightness level in a step comparator which then provides a variable reference voltage to scale the brightness levels. Figure 6 is a block circuit diagram of equipment which can achieve the adaptive scaling.

To vary the brightness level on the display in accordance with the adaptive scaling, the rows in a group are scaled over a fraction of the address line. Address lines outside the group are blanked by a blanking pulse applied in the form of an additional bit of information at the end of the period displaying the most significant bit. This decreases the line write time available from 67 $\mu$s to 53 $\mu$s. The rows in the group are compressed until the period for the least significant bit is only one line address time. If each field is addressed in two halves in parallel a group could scale a maximum of 150 lines (100% Brightness) or a minimum of 15 lines (10% Brightness) with a total of 10 brightness levels obtainable in all. Some or all of these brightness levels are used to define the variable reference voltages supplied to the A/D converter ensuring that the brightness level in each scene is faithfully reproduced. To reduce contouring effects the reference voltage signal may in fact be dithered in a random fashion by an amount equivalent to the least significant bit to realise 5-bit resolution. This adaptive feature essentially provides an automatic contrast and brightness adjustment so that at least sixteen grey levels can always be resolved in any scene irrespective of brightness.

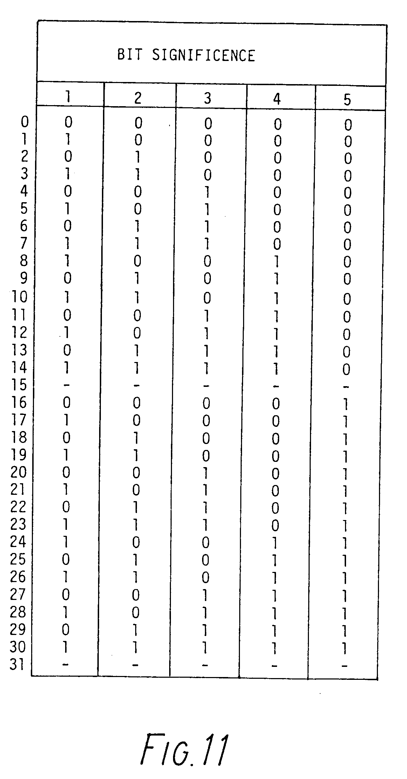

A display device which incorporates in accordance with the technique illustrated by Figures 7, 10 and 11 differs from that previously described in that firstly, data is accessed from the picture store 7, each significant bit then being stored in one of four RAMs 71 depending on the significance of each bit, in bytes of 8 bits. Secondly, data is retrieved in blocks of bytes in a fashion suitable to write a bit of a particular significance to a group of x lines of the display in one operation. The original scheme proposed only access to one line of data with each operation so the number of operations is now reduced by a factor x.

In the previously described arrangement it was proposed that the number of lines, m, scanned could be

$$m = 2^{n-1} \times p$$

where n is the number of bits and p is an integer. However, when the bits are written in a simple sequence of increasing significance as shown in Figure 8, an error arises when the time to write each line is significant compared to the time of the least significant bit. Therefore, as shown in Figure 8, when the minimum number of lines are scanned (15 lines for a 4 bit scheme) the line writing time error distorts the time division of the 4 bits to give a ration 0.75:1.75:3.75:8.75.

The data handling process described above may generate significant errors in half-tone levels if the addressing sequence of Figures 1 to 6 was employed. However, the addressing sequence can be modified to remove this error as shown in Figure 9; the addressing sequence is changed to address each bit according to its significance in the order 1,-,3,4,2 where - represents a line period where no line is addressed (blank line period). There are three consequences of this addressing sequence, namely the binary time division is error free in the ratio 1:2:4:8; the number of lines scanned row becomes 12, or a multiple of this number; the time available to write each line is reduced by 20%.

The decrease in efficiency of line write time can be restored by extending the scheme and utilising the blank line period to switch the last 1/2 bit of the 3rd significant bit as shown in Figure 10. This can be used in two ways: to provide a means of implementing a 1/2 bit error diffusion algorithm; to provide a reduced 5 bit scheme.

In this case the 1/2 bit becomes the least significant bit (m = 1) and must be subtracted from the 4th significant bit; the standard binary logic table must therefore be modified accordingly as shown in the table of Figure 11. From that table, it can be seen that of 32 half-tone levels in the reduced 5 bit scheme, only level 15 and 31 will not be accessible.

The scheme is suitable for use with a two state optical device as as a Surface Stabilised Ferroelectric Liquid Crystal Device (SSFLCD). However certain 'two field' addressing schemes are sometimes necessary

4

to drive a SSFLCD, where the 'on' and 'off' data are written in sequential fields which would not be compatible with the addressing sequence of Figures 1 to 6. However, using the modified sequence of Figures 7, 10 and 11 the group of lines addressed with the same bit significance (where the number of lines in group = total number of lines ÷ 12) can be considered to constitute a "minifield". This 'minifield' can then be scanned first with the 'on' strobe and data, and immediately afterwards with the 'off' strobe and data with the introduction of only a very small error ($\leq$ 1/4 bit) to the half-tone level.

In the addressing sequence of Figures 7, 10 and 11, the "1" bit is written in N/15 consecutive rows, then the "2" bit in N/15 consecutive rows and so on, i.e. all the rows of the "1" Binary Addressed Group (BAG) followed by 1/2 the rows of the "2" BAG, 1/4 the rows of the "3" BAG and /1/8 the rows of the "4" BAG. The picture store can therefore be addressed in blocks of N/15 rows instead of single rows, since the rows of the block are always consecutive, so reducing the number of address operations by a factor of N/15.

However, this modified sequence may produce errors in the display period of each digit and consequently in the grey scale. For example, in a 60 line display the number of rows in a block would be 4 and the bits would be written in the rows as follows: (4) 57, 58, 59, 60, (1) 1, 2, 3, 4, (2) 9, 10, 11, 12 (3) 25, 26, 27, 28 (4) 1, 2, 3, 4 (1) 5, 6, 7, 8 (2) 13, 14, 15, 16 (3) 29, 30, 31, 32 (4) 5, 6, 7, 8 etc. It can be seen that the "1" bit is displayed in rows 1, 2, 3, 4 for the 3 line periods (assuming 4 rows are written per line period) before being re-written by the "4" bit whereas the display ought to be 4 line periods. Similarly the "2" bit is displayed for 7 instead of 8 line periods, the "3" bit for 15 instead of 16 and the "4" bit for 35 instead of 32. To overcome this, a further modification to the write sequence is proposed (in Figure 9). Instead of writing the bits in the order 1, 2, 3, 4 they are written in the order 1, 0, 3, 4, 2 where 0 indicates that no row is written. Alternatively, a "1/2" bit can be written, during the "0" period, in the same row as the "4" bit. The "1/2" bit is in effect the L.S.B. of a 5 bit binary number and increases the number of grey levels from 16 to 30.

In other variant, the display consists of n lines of separately-addressable SSFLCD light gates; a typical value for n for use in television might be 575. Each line contains about 1.7n light-gates for a television picture having an aspect ratio of 9:16. Each light-gate (pixel) is divided into at least two subpixels having open areas a, b which could be in the ratio about 1:2.5.

By suitable logic circuits in the binary coded video input, if p - q = 2, these subpixels are addressed as a, b or a + b, so giving light outputs in the ratio 1 : 2.5 : 3.5. Further logic circuits are simultaneously used to implement a 2-bit BAG scheme, so giving a similar set of exposure times in the ratio 1:2:3. Thus, by combining simply in pairs, the available halftones are as shown in Table I.

**Table I : Halftones with 2-bit + 2-bit, Simple Processing**

(blacklevel = 1; ratio of times 2:1)

| Subpixel | Time | Total |
|---|---|---|
| 0 | 0 | 1 |
| 1 | 1 | 2 |
| 1 | 2 | 3 |
| 1 | 3 | 4 |
| 2.5 | 1 | 3.5 |
| 2.5 | 2 | 6 |
| 2.5 | 3 | 8.5 |
| 3.5 | 1 | 4.5 |
| 3.5 | 2 | 8 |
| 3.5 | 3 | 11.5 |

The spacing between the various available levels with this scheme must be compared with the minimum discernable contrast difference under average viewing conditions of 3 dB. This shows that 2-bit spatial and 2-bit temporal division should be adequate for halftoning until the maximum contract ratio as set by the panel construction (e.g. alignment) are improved or until the contrast ratio is better than about 24 dB (16:1).

If the spatially divided subpixel is combined with a particular bit in the temporal group, further halftones can be obtained up to a maximum of $m = p + q$ bits. Thus 15 levels can be obtained in this way from a 2-bit subdivided pixel and a 2-bit time division. Table II shows how 15 separate halftones can be obtained from $(2 + 2)$ where the ratio of the time slots is 4:1.

## TABLE II

### Halftones with 2-bit + 2-bit, More Sophisticated Processing
(blacklevel = 1; ratio of times 4:1)

| Subpixel | Time | Total |
|---|---|---|
| O (both fields) | O (both fields) | 1 |
| O (1st field) | 1 | |
| 1 (2nd field) | 4 | 5 |
| O (1st field) | 1 | |
| 2.5 (2nd field) | 4 | 11 |
| O (1st field) | 1 | |
| 3.5 (2nd field) | 4 | 15 |
| 1 (1st field) | 1 | |
| O (2nd field) | 4 | 2 |
| 1 (1st field) | 1 | |
| 1 (1st field) | 4 | 6 |
| 1 (1st field) | 1 | |
| 2.5 (2nd field) | 4 | 12 |
| 1 (1st field) | 1 | |
| 3.5. (2nd field) | 4 | 16 |
| 2.5 (first field) | 1 | |
| O (2nd field) | 4 | 3.5 |
| 2.5 (1st field) | 1 | |
| 1 (2nd field) | 4 | 7.5 |
| 2.5 (1st field) | 1 | |
| 2.5 (2nd field) | 4 | 13.5 |
| 2.5 (1st field) | 1 | |
| 3.5 (2nd field) | 4 | 17.5 |

6

| Subpixel | Time | Total |
|---|---|---|
| 3.5 (1st field) | 1 | |
| 0   (2nd field) | 4 | 4.5 |
| | | |
| 3.5 (1st field) | 1 | |
| 1   (2nd field) | 4 | 8.5 |
| | | |
| 3.5 (1st field) | 1 | |
| 2.5 (2nd field) | 4 | 14.5 |
| | | |
| 3.5 (1st field) | 1 | |
| 3.5 (2nd field) | 4 | 18.5 |

The next stage is to use more bits in either the spatial or time division or both. If combinations are used, there would be 31 greylevels; this is more than could be justified on the basis of what the eye can just see except in the case of some particular non-random images such as lines, gratings, regular geometrical shapes etc.

Normally an overall gamma of 2 is desirable because the transmitted video is usually compressed. It has been shown that an adequate television picture can be produced with a 4-bit signal reproduced on a CRT with a gamma of about 2 providing contouring is eliminated by 'error diffusion'. The SSFLCD can be made to have a gamma of 2 if an m-bit divided subpixel is simultaneously addressed by a m-bit BAG or pulsed backlighting scheme so that the same bit in the video byte is used for both.

There will now be described various schemes for addressing, namely:-

(a) Monochrome : no BAG: Greyscale by Divided Pixel: If the pixel is divided by a binary sequence into d divisions, there will be about $2^d$ halftones, and the time available for writing a line is unchanged, but the number of column conductors is increased by a factor d.

(b) Monochrome : BAG: Undivided Pixel: If time division multiplexing is used, g grey levels are obtained by writing each line with g different time slots. In the BAG scheme this requires each line to be written n times where

$$n = \log(g)/\log(2)$$

(c) Colour Filters : BAG: Pixels Divided: If a greyscale of P levels is achieved by dividing the pixel, and of Q by a BAG scheme, a greyscale of G = P x Q can be obtained. The time available per line is m times shorter than a simple scan where

$$m = \log(g)/\log(2)$$

If colour is added by colour filter dots, (3) becomes

$$m(c) = c \log(g)/\log^2$$

where c is constant between 2 and 3.

(d) Writing From Top and Bottom: If the display is written in two halves, these can be addressed (written) simultaneously, and there is twice as long for writing a line as in (a) - (c).

(e) Quad Multiplex: In this scheme, pixels are accessed for their 'line' electrode from the top as well as the sides using a kind of interdigitated structure. This gains a factor 4 in available line time over (a)-(c).

(f) Frame Sequential Backlighting - Full Colour: For an m-bit greyscale by time division, the display needs to be written approximately 2m times and the backlights pulsed on for m times in a binary sequence of integrated light intensity. If the pixels are already subdivided, then, for three colours, it is possible to write the tricolour frame with two full-resolution green fields and one each of half-resolution red and blue with 4 writing pulses. Erase pulses are not necessary between successive writing processes if the entire field is written every time it is changed.

Because the same resolution is not needed in the blue and red compared with green, 575 line 4-bit green + 288 line 2-bit blue + 288 line 2-bit red give a visually acceptable entertainment TV picture.

7

This means the pixel should be divided and the backlights pulsed on twice per 15 ms for green, and once each for red and blue.

(g) Frame Sequential Backlighting - 7 colours: With pulsed backlighting and no halftones, only 7 Colours are available (as in teletext). This will allow more time per line for writing.

Table III shows details of the various options.

<u>TABLE III</u> : Details of Three TV Panels

All three panels are based on a television display running at a frame rate of 65 Hz, and with an aspect ratio of 16:9. There are 575 active lines and no interlace.

| Subpixel | Halftones | | | Time/line |
|---|---|---|---|---|
| | **R** | **G** | **B** | |
| 1. Pulsed backlight divided pixel, quad multiplex, Resolution G = 575 x 1022 R = 288 x 511 B = 288 x 511 (allowing 1 ms for the lamps) | 9(15) | 3 | 3 | 32 $\mu$s |
| 2. Colour dot divided pixel according to the colour filter pattern BAG (4,4,4) quad multiplex Resolution G = 575 x 1022 R = 288 x 511 B = 288 x 511 described under (c) and (e) | 15 | 15 | 15 | 16 $\mu$s |
| 3. Colour dot, Divided pixel, Pixel further divided according to the colour filter pattern 2-bit BAG quad multiplex Resolution G = 575 x 1022 R = 575 x 511 B = 575 x 511 | 9(15) | 9(15) | 9(15) | 52 $\mu$s |

EP 0 261 901 B1

Please note that the figures in brackets in table III refer to the halftones available by the more sophisticated signal processing of the kind shown in Table II. The eye may not be able to discriminate as many halftones as this, and it is not necessarily an advantage to go to these lengths. However, suitable logic circuits might be employed to retain only those combinations which would be useful, and particularly near black, additional levels could be added by alternating randomly between two of the quantized levels.

By using time-division and divided-pixel systems simultaneously, the following advantages are achieved: the spacing between the available halftone levels with simple signal processing (Table I) is more uniform; the restrictions on the available photolithography, space available for conducting lines and speed of switching the liquid crystal or backlight can all be taken into account so that just one of these does not alone limit the available number of halftones; a 2-bit BAG scheme and a pixel structure divided into two, should be adequate for many SSFLC flat panels for entertainment television; a large number of halftones could be employed with the same panel construction by using more sophisticated drive electronics, or alternatively, very similar drive electronics could be used with a more sophisticated panel to do the same thing; as shown a very similar scheme can be used in a frame sequential system using pulsed coloured backlighting; the method is expandable for time or space elements which are not strictly in a binary sequence, examples being given where the dynamic range was widened by using pseudo-binary sequences of 1 : 2.5 : 3.5 and 1 4 : 5, the gamma of the display can be made 2 by using the same bit in the video byte for both time and spatial division.

## Claims

1. A display device comprising:
a lattice (16) of pixels, each selectably settable hi a bi-stable manner in dependence on a corresponding binary data word of a received data signal representing one picture for display, the data word comprising a plurality of sections and representing a brightness level for the pixel; and means to effect time-multiplex addressing of rows of pixels according to a predetermined sequence; characterised in that, for each addressing of a row, the pixels of the row are each addressed with a section of the corresponding data word, the sections having the same significance, and, in the course of the sequence, the pixels of each row are addressed with each section of the corresponding words, the predetermined sequence being such that any given addressing of a row has a temporal separation in the sequence from the next addressing thereof which is proportional to the significance of the sections corresponding to the given addressing.

2. A display device according to Claim 1: characterised in that the addressing means includes: means to set all the pixels of one row in accordance with a section of the corresponding data words having one significance and, next in the addressing sequence, to set all the pixels of another row in accordance with a section of the corresponding data words having another significance.

3. A display device according to Claim 2, characterised in that each row of a group of n rows, where n is equal to the number of sections in each data word, is set in accordance with a section of the corresponding data words different from the others in the group, the members of the group being adjacent in the addressing sequence.

4. A display device according to Claim 1, 2 or 3, characterised by means to produce a value for the mean brightness level for the picture, and means to effect scaling of the sections of the data words for a next picture in accordance with the produced mean brightness value for the said picture.

5. A display device according to any one of Claims 1 to 4, characterised in that a plurality of liquid crystal cells form the lattice.

6. A method of operating a display device having a lattice (16) of pixels each selectably settable in a bi-stable manner, the method comprising:-
receiving a data signal representing a picture for display, the signal comprising a plurality of binary data words each representing a brightness level for a corresponding pixel, each data word including a plurality of sections, and time-multiplex addressing rows of pixels a plurality of times for the picture;
characterised by addressing the pixels of each row each with a section of the corresponding data word, the sections having the same significance, in a sequence in the course of which the pixels of each row are each addressed with each section of the corresponding word, any given addressing of a

9

EP 0 261 901 B1

row having a temporal separation in the addressing sequence from the next addressing thereof which is proportional to the significance of the sections corresponding to the given addressing.

7. A method according to Claim 6, characterised in that the addressing includes: setting all the pixels of one row in accordance with a section of the corresponding data words having one significance and, next in the addressing sequence, setting all the pixels of another row in accordance with another section of the corresponding data words having another significance.

8. A method according to Claim 7, characterised in that each row of a group of n rows where n is equal to the number of sections in each data word is set in accordance with a section of the corresponding data words different from the others in the group, the members of the group being addressed in direct succession.

9. A method according to any one of Claims 6 to 8, characterised by producing a value for the mean brightness level for the picture, and effecting scaling of the sections of the data words for the next picture in accordance with the produced mean brightness value for the said picture.

**Patentansprüche**

1. Anzeigevorrichtung umfassend:
    ein Gitter (16) von Pixeln, von denen jedes wahlweise in bistabiler Weise in Abhängigkeit von einem binären Datenwort einstellbar ist, das ein Bild für die Anzeige darstellt, wobei das Datenwort eine Vielzahl von Abschnitten umfaßt und einen Helligkeitspegel für das Pixel darstellt, und Mittel zur Bewirkung einer Zeit-Multiplex-Adressierung von Pixelreihen in einer vorgegebenen Reihenfolge, dadurch gekennzeichnet, daß für jede Adressierung einer Reihe die Pixel der Reihe jeweils mit einem Abschnitt des entsprechenden Datenwortes adressiert werden, wobei die Abschnitte dieselbe Bedeutsamkeit haben, und daß im Verlauf der Reihenfolge die Pixel jeder Reihe mit jedem Abschnitt der entsprechenden Worte adressiert werden, wobei die vorgegebene Reihenfolge so ist, daß irgendeine gegebene Adressierung einer Reihe einen zeitlichen Abstand in der Reihenfolge von ihrer nächsten Adressierung hat, die proportional zu der Bedeutsamkeit der der gegebenen Adressierung entsprechenden Abschnitte ist.

2. Anzeigevorrichtung nach Anspruch 1, dadurch gekennzeichnet, daß die Adressierungsmittel enthalten: Mittel zum Einstellen aller Pixel einer Reihe gemäß einem Abschnitt der entsprechenden Datenworte mit einer Bedeutsamkeit und danach in der Adressierungs-Reihenfolge zum Einstellen aller Pixel einer anderen Reihe gemäß einem Abschnitt der entsprechenden Datenworte mit einer anderen Bedeutsamkeit.

3. Anzeigevorrichtung nach Anspruch 2, dadurch gekennzeichnet, daß jede Reihe von einer Gruppe aus n Reihen, wobei n gleich der Anzahl der Abschnitte in jedem Datenwort ist, gemäß einem Abschnitt der entsprechenden Datenworte eingestellt wird, der sich von den anderen in der Gruppe unterscheidet, wobei die Elemente der Gruppe in der Adressierungs-Reihenfolge benachbart sind.

4. Anzeigevorrichtung nach Anspruch 1, 2 oder 3, gekennzeichnet durch Mittel zur Erzeugung eines Wertes für den mittleren Helligkeitspegel des Bildes, und Mittel zur Skalierung der Abschnitte des Datenwortes für ein nächstes Bild gemäß dem erzeugten mittleren Helligkeitswert für das Bild.

5. Anzeigevorrichtung nach einem der Anprüche 1 bis 4, dadurch gekennzeichnet, daß das Gitter durch eine Vielzahl von Flüssigkristallzellen gebildet wird.

6. Verfahren zum Betrieb einer Anzeigevorrichtung mit einem Gitter (16) von Pixeln, von denen jedes wahlweise in bistabiler Weise einstellbar ist, wobei das Verfahren umfaßt:
    Empfangen eines Datensignals, das ein Bild für die Anzeige darstellt, wobei das Signal eine Vielzahl von binären Datenworten umfaßt, von denen jedes einen Helligkeitspegel für ein entsprechendes Pixel darstellt, und wobei jedes Datenwort eine Vielzahl von Abschnitten enthält und die Pixel-Reihen eine Vielzahl von Malen für das Bild im Zeit-Multiplex adressiert werden;
    gekennzeichnet durch Adressieren der Pixel jeder Reihe mit einem Abschnitt des entsprechenden Datenwortes, wobei die Abschnitte dieselbe Bedeutsamkeit haben, in einer Reihenfolge, in deren

10

Verlauf die Pixel jeder Reihe jeweils mit jedem Abschnitt des entsprechenden Wortes adressiert werden, und wobei eine gegebene Adressierung einer Reihe einen zeitlichen Abstand in der Adressierungs-Reihenfolge von ihrer nächsten Adressierung hat, der proportional zu der Bedeutsamkeit der der gegebenen Adressierung entsprechenden Abschnitte ist.

7. Verfahren nach Anspruch 6, dadurch gekennzeichnet, daß die Adressierung einschließt: Einstellen aller Pixel einer Reihe gemäß einem Abschnitt der entsprechenden Datenworte mit einer Bedeutsamkeit und danach in der Adressierungs-Reihenfolge Einstellen aller Pixel einer anderen Reihe gemäß einem anderen Abschnitt des entsprechenden Datenwortes mit einer anderen Bedeutsamkeit.

8. Verfahren nach Anspruch 7, dadurch gekennzeichnet, daß jede Reihe von einer Gruppe von n Reihen, wobei n gleich der Anzahl von Abschnitten in jedem Datenwort ist, gemäß einem Abschnitt des entsprechenden Datenwortes eingestellt wird, der sich von den anderen in der Gruppe unterscheidet, wobei die Elemente in der adressierten Gruppe unmittelbar aufeinander folgen.

9. Verfahren nach einem der Ansprüche 6 bis 8, gekennzeichnet durch Erzeugung eines Wertes für den mittleren Heiligkeitspegel des Bildes, und durch Bewirken einer Skalierung der Abschnitte der Datenworte für ein nächstes Bild entsprechend dem erzeugten mittleren Helligkeitswert für das Bild.

**Revendications**

1. Dispositif d'affichage comportant:
   une matrice de pixels, chacune étant sélectivement réglable de façon bistable, en fonction du mot de données d'un signal de données reçu correspondant, représentant une image à afficher, le mot de données comportant plusieurs sections et représentant un niveau de luminosité pour le pixel; et un moyen destiné à effectuer l'adressage des rangées de pixels par multiplexage temporel, selon une séquence prédéterminée; caractérisé en ce que, pour chaque adressage d'une rangée, les pixels de la rangée sont adressés chacun, par une section du mot de données correspondant, les sections ayant la même importance, et, durant la séquence, les pixels de chaque rangée sont adressés par chaque section des mots correspondant, la séquence prédéterminée étant telle que tout adressage donné d'une rangée comporte une séparation temporelle de la séquence avec son adressage suivant, qui est proportionnelle à l'importance des sections correspondant à l'adressage donné.

2. Dispositif d'affichage selon la revendication 1, caractérisé en ce que le moyen d'adressage comporte: un moyen destiné à la mise en accord de tous les pixels d'une rangée avec une section des mots de données correspondant ayant une importance et, par la suite dans la séquence d'adressage, la mise en accord de tous les pixels d'une autre rangée avec une section des mots de données correspondant ayant une autre importance.

3. Dispositif d'affichage selon la revendication 2, caractérisé en ce que chaque rangée d'un groupe de n rangées, où n est égal au nombre de sections de chaque mot de données, est mis en accord avec une section des mots de données correspondants qui sont différents des autres mots du groupe, les éléments du groupe étant adjacents dans la séquence d'adressage.

4. Dispositif d'affichage selon la revendication 1, 2 ou 3, caractérisé par un moyen destiné à produire une valeur du niveau de luminosité moyen de l'image et un moyen destiné à effectuer la mise à l'échelle des sections des mots de données pour l'image suivante selon la valeur de luminosité moyenne produite pour ladite image.

5. Dispositif d'affichage selon l'une quelconque des revendications 1 à 4, caractérisé en ce que la matrice est formée de plusieurs cellules à cristaux liquides.

6. Procédé de fonctionnement d'un dispositif d'affichage possédant une matrice de pixels (16) chacune étant positionnable sélectivement de façon bistable, le procédé comportant:
   la réception d'un signal de données représentant une image à afficher, le signal comportant plusieurs mots de données binaires représentant chacun un niveau de luminosité pour un pixel correspondant, chaque mot de données comportant plusieurs sections, et l'adressage des rangées de pixels par multiplexage temporel plusieurs fois pour une image;

caractérisé par l'adressage des pixels de chaque rangée avec une section des mots de données correspondants, les sections ayant la même signification, selon une séquence au cours de laquelle les pixels de chaque rangée sont adressés chacun avec chaque section du mot correspondant, tout adressage donné d'une rangée comportant une séparation temporelle dans la séquence d'adressage avec son adressage suivant, qui est proportionnelle à la signification des sections correspondant à l'adressage donné.

7. Procédé selon la revendication 6, caractérisé en ce que l'adressage comporte: la mise en accord de tous les pixels d'une rangée avec une section des mots de données correspondants ayant une signification et, par la suite dans la séquence d'adressage, la mise en accord de tous les pixels d'une autre rangée avec une autre section des mots de données correspondant ayant une autre importance.

8. Procédé selon la revendication 7, caractérisé en ce que chaque rangée d'un groupe de n rangées, où n est égal au nombre de sections de chaque mot de données, est mis en accord avec une section des mots de données correspondant qui sont différents des autres mots du groupe, les membres du groupe étant adressés en succession directe.

9. Procédé selon l'une quelconque des revendications 6 à 8, caractérisé par la production d'une valeur du niveau de luminosité moyen de l'image, et la mise à l'échelle des sections des mots de données de l'image suivante selon la valeur de luminosité moyenne produite pour ladite image.

FIG.1

VIDEO SIGNAL RECEIVER — 2

PICTURE STORE — 3

ROW OUTPUT — 4
ROW OUTPUT — 5
ROW OUTPUT — 6
ROW OUTPUT — 7

BIT EXTRACTOR — 8
BIT EXTRACTOR — 9
BIT EXTRACTOR — 10
BIT EXTRACTOR — 11

PIXEL DRIVER — 12
PIXEL DRIVER — 13
PIXEL DRIVER — 14
PIXEL DRIVER — 15

PIXEL ELEMENT LATTICE — 16

1

FIG.2

21
20

(1/1) (1/2) (561/1) (561/2) (561/3) (561/4) (600/50)

EP 0 261 901 B1

FIG. 3

FIG.4

FIG.5

FIG.6

FIG.7

EP 0 261 901 B1

FIG.8

FIG. 9

*FIG.10*

| | BIT SIGNIFICENCE | | | | |
|---|---|---|---|---|---|
| | 1 | 2 | 3 | 4 | 5 |
| 0 | 0 | 0 | 0 | 0 | 0 |
| 1 | 1 | 0 | 0 | 0 | 0 |
| 2 | 0 | 1 | 0 | 0 | 0 |
| 3 | 1 | 1 | 0 | 0 | 0 |
| 4 | 0 | 0 | 1 | 0 | 0 |
| 5 | 1 | 0 | 1 | 0 | 0 |
| 6 | 0 | 1 | 1 | 0 | 0 |
| 7 | 1 | 1 | 1 | 0 | 0 |
| 8 | 1 | 0 | 0 | 1 | 0 |
| 9 | 0 | 1 | 0 | 1 | 0 |
| 10 | 1 | 1 | 0 | 1 | 0 |
| 11 | 0 | 0 | 1 | 1 | 0 |
| 12 | 1 | 0 | 1 | 1 | 0 |
| 13 | 0 | 1 | 1 | 1 | 0 |
| 14 | 1 | 1 | 1 | 1 | 0 |
| 15 | - | - | - | - | - |
| 16 | 0 | 0 | 0 | 0 | 1 |
| 17 | 1 | 0 | 0 | 0 | 1 |
| 18 | 0 | 1 | 0 | 0 | 1 |
| 19 | 1 | 1 | 0 | 0 | 1 |
| 20 | 0 | 0 | 1 | 0 | 1 |
| 21 | 1 | 0 | 1 | 0 | 1 |
| 22 | 0 | 1 | 1 | 0 | 1 |
| 23 | 1 | 1 | 1 | 0 | 1 |
| 24 | 1 | 0 | 0 | 1 | 1 |
| 25 | 0 | 1 | 0 | 1 | 1 |
| 26 | 1 | 1 | 0 | 1 | 1 |
| 27 | 0 | 0 | 1 | 1 | 1 |
| 28 | 1 | 0 | 1 | 1 | 1 |
| 29 | 0 | 1 | 1 | 1 | 1 |
| 30 | 1 | 1 | 1 | 1 | 1 |
| 31 | - | - | - | - | - |

FIG.11